# FASCICULE DE BREVET EUROPEEN

(11) **EP 0 959 263 B1**
(45) Date de publication et mention de la délivrance du brevet: **04.07.2001**
(21) Numéro de dépôt: 99401095.7
(22) Date de dépôt: 05.05.1999
(51) Int. Cl.: F16F 9/02, F16F 9/43

(54) **Ressort à gaz incorporant un organe de sécurité**
Gasfeder mit Sicherheitsvorrichtung
Gas spring comprising a safety device

(30) Priorité: 22.05.1998 FR 9806459
(43) Date de publication de la demande: 24.11.1999
(73) Titulaire: Orflam Industries, 52100 Saint Dizier (FR)
(72) Inventeur: Phelizot, Jacques, 55170 Ancerville (FR)
(74) Mandataire: Leszczynski, André

(56) Documents cités:
- EP-A- 0 427 468
- EP-A- 0 490 386
- PATENT ABSTRACTS OF JAPAN vol. 008, no. 170 (M-315), 7 août 1984 (1984-08-07) & JP 59 065609 A (TOUKIYUU SHIYARIYOU SEIZOU KK), 13 avril 1984 (1984-04-13)

## Description

La présente invention se rapporte à un dispositif à fluide compressible, du type comportant une chambre de compression destinée à être remplie par un fluide compressible et un piston mobile dans cette chambre pour comprimer le fluide qui s'y trouve.

Un tel dispositif est connu du document EP-A-0 427 468.

Le fluide qui est comprimé par le piston exerce sur ce dernier une force de rappel et lorsque le fluide utilisé est un gaz, un tel dispositif est encore appelé ressort à gaz.

Le piston comporte une tige qui coulisse dans un alésage d'une pièce de guidage encore appelée cartouche et la tige est munie à son extrémité située dans la chambre de compression d'une collerette qui au repos vient en appui contre la pièce de guidage.

En cas de course accidentelle du piston au-delà de sa course nominale, la collerette est susceptible de heurter le fond de la chambre de compression et de casser, auquel cas elle n'assure plus sa fonction de retenue de la tige et cette dernière est alors projetée violemment hors du ressort par la pression du gaz présent dans la chambre de compression, risquant d'occasionner des dommages matériels et/ou corporels.

L'invention vise à remédier à ce problème.

Elle y parvient par le fait que le dispositif à fluide compressible comporte un organe de sécurité disposé de manière à être percuté par le piston en cas de course de ce dernier supérieure d'une valeur prédéterminée à sa course nominale et par le fait que cet organe de sécurité est agencé pour provoquer la purge de la chambre de compression lorsqu'il est percuté par le piston.

Grâce à l'invention, on évite qu'en cas de choc du piston contre le fond de la chambre de compression et d'endommagement du piston la tige ne soit expulsée violemment hors du dispositif.

L'organe de sécurité selon l'invention est différent d'un clapet de fin de course pour vérin hydraulique, tel que décrit dans les Techniques de l'ingénieur, édition 1976, au chapitre "Vérins hydrauliques" et plus particulièrement à la figure 49.

L'organe de sécurité selon l'invention ne vise en effet pas à limiter la course mais à éviter un risque de départ accidentel de la tige du piston, comme expliqué plus haut.

En outre, après actionnement de l'organe de sécurité selon l'invention, le ressort est hors service, ce qui n'est pas le cas dans un dispositif de fin de course pour vérins.

Dans une réalisation particulière de l'invention, l'organe de sécurité présente une portion dont l'effort de rupture est prédéterminé.

Toujours dans une réalisation particulière, l'organe de sécurité forme saillie dans le fond de la chambre de compression, de préférence d'au moins 3mm.

Il peut être avantageux de faire en sorte que l'organe de sécurité soit solidaire d'un bouchon vissé dans le corps du ressort et pouvant servir à tester la résistance du ressort à la pression et à vider la chambre de compression à la fin de l'utilisation du ressort.

Lorsque le piston comporte une tige dont l'extrémité inférieure est munie d'une collerette, l'organe de sécurité est avantageusement disposé de manière à être percuté par la collerette en un emplacement plus proche de l'axe de la tige que de sa périphérie.

De préférence, la course du piston à partir de laquelle l'organe de sécurité est percuté et provoque la purge de la chambre de compression est supérieure de 2mm au moins à sa course nominale.

L'invention sera mieux comprise à la lecture de la description détaillée qui va suivre, d'un exemple de réalisation non limitatif, et à l'examen du dessin annexé sur lequel :
- la figure 1 est une vue schématique en coupe d'un ressort à gaz conforme à l'invention, le piston étant représenté en fin de course nominale,
- la figure 2 est une vue analogue à la figure 1, le piston étant représenté en butée dans le fond de la chambre de compression, et
- la figure 3 illustre une variante de réalisation de l'organe de sécurité.

Le ressort à gaz 1 représenté sur les figures comporte un carter métallique 2 en forme de cylindre creux formé à son extrémité inférieure et ouvert à son extrémité supérieure, définissant une chambre de compression 3 à l'intérieur de laquelle est mobile un piston monobloc 4 dont la tige, d'axe longitudinal X, coulisse dans un alésage réalisé dans une pièce de guidage 5 introduite dans l'ouverture du carter 2.

La tige du piston 4 présente à son extrémité inférieure une collerette 6 qui, au repos, vient buter contre la pièce de guidage 5 pour retenir le piston 4 dans le ressort à gaz.

La pièce de guidage 5 est retenue dans le carter 2 par un jonc métallique annulaire 8, lequel vient en appui d'une part dans un retrait annulaire 7 de la pièce de guidage 5 et d'autre part dans une gorge annulaire 9 réalisée à proximité de l'extrémité supérieure du carter 2.

Des segments de guidage 10 et 11 et des éléments d'étanchéité successifs 12 et 13 sont de façon connue en soi logés dans la pièce de guidage et s'appliquent sur la tige de piston.

Les éléments d'étanchéité 12 et 13 peuvent être constitués par exemple par des joints composites et délimitent entre eux une chambre annulaire 15 de lubrification, remplie d'un lubrifiant.

Un joint racleur 16 est logé en partie supérieure de la pièce de guidage 5.

Deux joints toriques 17 et 18 s'interposent de façon étanche entre la pièce de guidage 5 et le carter 2.

Un évidement axial 20, dont la profondeur est supérieure à celle de la gorge logeant le joint 17 adjacent à la chambre de compression 3, permet à ce dernier de se déformer lorsque la pression existant dans le jeu de montage entre la pièce de guidage 5 et le carter 2 entre les joints 17 et 18 est supérieure à la pression régnant dans la chambre de compression.

Un perçage radial 19 débouchant à une extrémité dans la chambre de lubrification 15 et à l'autre extrémité à la périphérie de la pièce de guidage entre les joints 17 et 18 permet, à la fin de l'utilisation du ressort, et lorsque la chambre de compression est vidée, de réaliser une purge automatique de la chambre de lubrification 15 grâce au fait que le joint torique 17 cesse d'être étanche lorsqu'il s'engage dans l'évidement axial 20 précité.

Conformément à l'invention, un organe de sécurité 21 est disposé de manière à être percuté par le piston 4 lorsque la course de ce dernier excède d'une valeur prédéterminée sa course nominale.

Dans l'exemple décrit, l'organe de sécurité 21 comporte un pion central 25 formant saillie de 3mm dans le fond de la chambre de compression et une portion annulaire amincie 22 reliant ce pion 25 à un bouchon creux 23 vissé dans un perçage 24 du carter 2.

Le dévissage du bouchon 23 permet de purger la chambre de compression.

La résistance mécanique de la portion annulaire amincie 22 est choisie de telle sorte que cette dernière rompe lorsque le pion 25 est percuté par le piston 4.

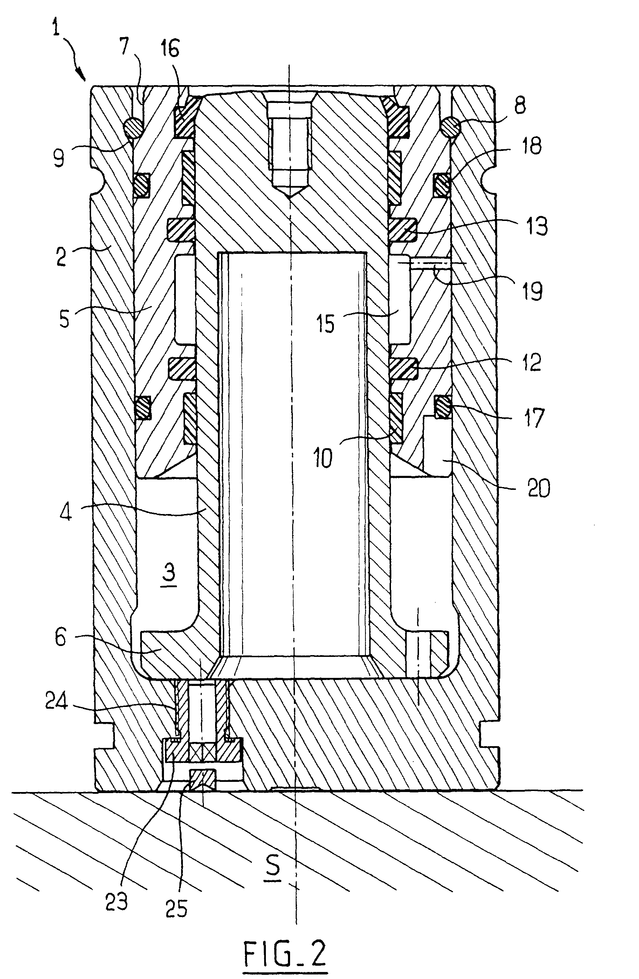

En cas de course du piston 4 suffisante pour que ce dernier vienne en appui dans le fond de la chambre de compression 3, comme représenté sur la figure 2, la collerette 6 percute en un point relativement proche de l'axe X le pion 25 et le repousse à l'intérieur du bouchon 23, après rupture de la portion annulaire amincie 22.

Le pion 25 se trouve alors expulsé au travers du bouchon creux 23 et la chambre de compression 3 peut se vider.

On évite ainsi en cas de rupture de la collerette 6 sous l'effet de la fatigue du métal, qu'il règne une pression suffisante dans la chambre de compression 3 pour expulser la tige 4 hors du ressort.

Dans l'exemple considéré, on a supposé que le ressort reposait sur un bâti S de sorte que le pion 25 se trouve projeté contre celui-ci.

Lorsque cela n'est pas le cas, on peut fixer par boulonnage par exemple sur l'extrémité inférieure du carter 2 une plaque contre laquelle est projeté le pion 25.

Cette plaque assure ainsi la fonction d'écran de protection vis-à-vis de l'expulsion du pion 25 au travers du bouchon 23.

Bien entendu, l'invention n'est pas limitée à l'exemple de réalisation qui vient d'être décrit.

On peut notamment modifier la forme et/ou la nature de l'organe de sécurité et des autres éléments du ressort sans sortir du cadre de la présente invention.

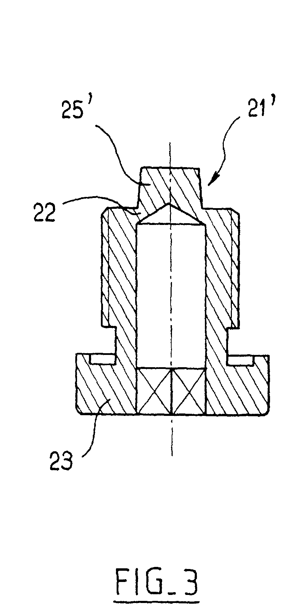

On a représenté sur la figure 3 une variante de réalisation de l'organe de sécurité.

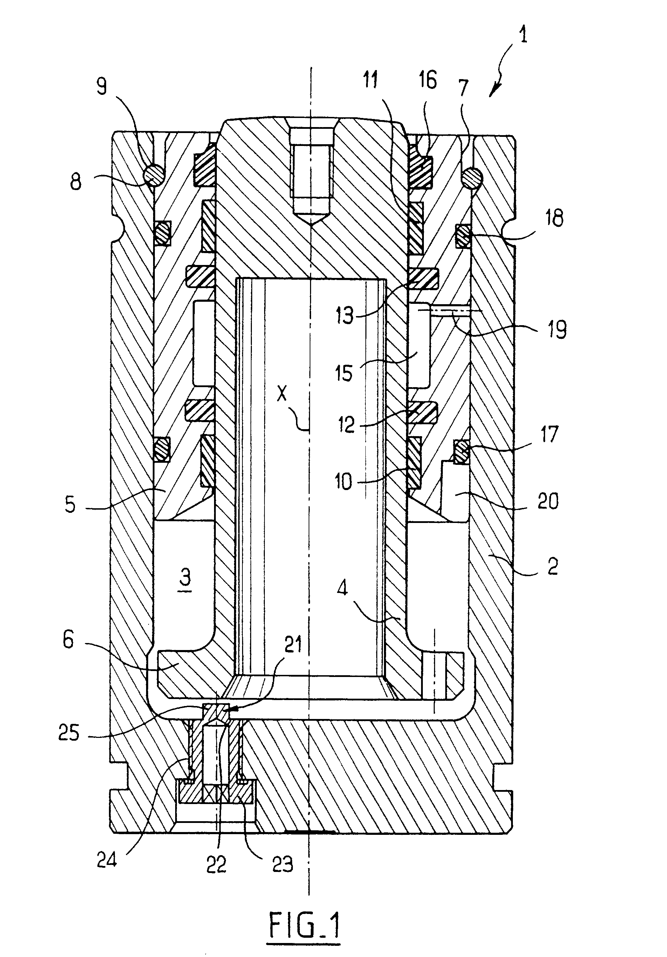

L'organe de sécurité 21' représenté sur la figure 3 diffère de celui représenté sur la figure 1 par le fait que le pion central 25' est tronconique au lieu d'être cylindrique de révolution.

Grâce à la légère conicité du pion 25' vers l'intérieur du ressort, l'expulsion du pion au travers du bouchon 23 est facilitée.

Dans une variante non représentée, l'organe de sécurité est constitué par un bouchon plein fixé dans un perçage du corps du ressort, ce bouchon étant par exemple fileté et vissé dans ce perçage, et présentant une extrémité intérieure agencée pour être percutée par le piston lorsque la course de ce dernier excède d'une valeur prédéterminée sa course nominale. Le bouchon est agencé pour se libérer du perçage lorsqu'il est percuté par le piston, par destruction des filetages du bouchon et du perçage du carter, ces filetages ayant un effort de rupture prédéterminé.

## Revendications

1. Dispositif à fluide compressible tel qu'un ressort à gaz, comportant une chambre de compression (3) et un piston (4) mobile dans cette chambre, caractérisé par le fait qu'il comporte un organe de sécurité (21) disposé de manière à être percuté par le piston (4) en cas de course de ce dernier supérieure d'une valeur prédéterminée à sa course nominale et par le fait que ledit organe de sécurité (21;21') est agencé pour provoquer la purge de la chambre de compression (3) lorsqu'il est percuté par le piston.

2. Dispositif selon la revendication 1, caractérisé par le fait que ledit organe de sécurité (21;21') présente une portion (22) dont l'effort de rupture est prédéterminé.

3. Dispositif selon l'une des revendications 1 et 2, caractérisé par le fait que ledit organe de sécurité forme saillie dans le fond de la chambre de compression, de préférence d'au moins 3mm.

4. Dispositif selon l'une quelconque des revendications précédentes, caractérisé par le fait que ledit organe de sécurité est solidaire d'un bouchon creux (23) vissé dans le corps du ressort.

5. Dispositif selon la revendication 4, caractérisé par le fait que l'organe de sécurité comporte un pion central (25;25') relié par une portion annulaire amincie (22) audit bouchon (23).

6. Dispositif selon la revendication précédente caractérisé par le fait que le pion central (25') est tronconique.

7. Dispositif selon la revendication 5 ou 6, caractérisé par le fait qu'il comporte une plaque rapportée sur le corps du ressort de manière à constituer un écran de protection vis-à-vis de l'expulsion du pion (25;25') au travers dudit bouchon (23).

8. Dispositif selon l'une quelconque des revendications 1 à 3, caractérisé par le fait que l'organe de sécurité est constitué par un bouchon plein fixé dans un perçage du corps du ressort, et de préférence par un bouchon fileté vissé dans un perçage du corps du ressort.

9. Dispositif selon l'une quelconque des revendications précédentes, caractérisé par le fait que le piston comporte une tige dont l'extrémité inférieure est munie d'une collerette (6) et par le fait que l'organe de sécurité est disposé de manière à être percuté par la collerette (6) en un emplacement plus proche de l'axe de la tige (X) que de sa périphérie.

10. Dispositif selon l'une quelconque des revendications précédentes, caractérisé par le fait que le piston (4) est monobloc.

11. Dispositif selon l'une quelconque des revendications précédentes, caractérisé par le fait que la course du piston à partir de laquelle il percute l'organe de sécurité et provoque la purge de la chambre de compression est supérieure de 2mm au moins à sa course nominale.

12. Dispositif selon l'une quelconque des revendication précédentes, caractérisée par le fait que le fluide utilisé est un gaz.

## Patentansprüche

1. Vorrichtung für ein kompressibles Fluid, wie etwa eine Gasfeder, die eine Kompressionskammer (3) und einen Kolben (4) hat, der in der Kammer beweglich ist, dadurch gekennzeichnet, dass sie eine Sicherheitsabschnitt aufweist, derart, um durch den Kolben (4) in dem Fall der Entfernung bzw. des Hubes des letzteren über einen vorbestimmten Wert zu seinem nominalen Hub bzw. seiner nominalen Entfernung gestoßen bzw. erschüttert zu werden, und dadurch, dass der besagte Sicherheitsabschnitt (21; 21') eingerichtet ist, um die Entlüftung der Kompressionskammer (3) anzuregen, wenn sie durch den Kolben angestoßen wird.

2. Vorrichtung nach Anspruch 1, dadurch gekennzeichnet, dass der Sicherheitsabschnitt (21; 21') ein Teil (22) hat dessen Bruchbelastung vorbestimmt ist.

3. Vorrichtung nach einem der Ansprüche 1 und 2, dadurch gekennzeichnet, dass der Sicherheitsabschnitt einen Vorsprung bzw. eine Auskragung an dem Boden der Kompressionskammer bildet, von bevorzugt weniger als 3 mm.

4. Vorrichtung nach einem der voranstehenden Ansprüche, dadurch gekennzeichnet, dass der Sicherheitsabschnitt von einem einstückigen Hohlpropf bzw. Hohlverschluss (23) ist, der in den Federkörper geschraubt ist.

5. Vorrichtung nach Anspruch 4, dadurch gekennzeichnet, dass der Sicherheitsabschnitt einen zentralen Metallabschnitt (25; 25') aufweist, der über ein kreisförmig verdünntes bzw. zulaufendes Teil (22) an den Verschluss bzw. Propf (23) anschließt.

6. Vorrichtung nach einem der voranstehenden Ansprüche, dadurch gekennzeichnet, dass das zentrale Metallstück (25') kegelstumpfartig ist.

7. Vorrichtung nach einem der Ansprüche 5 oder 6, dadurch gekennzeichnet, dass sie eine Platte aufweist, die auf den Federkörper derart aufgesetzt bzw. mit diesem zusammengesetzt ist, um eine Schutzblende gegenüber dem Ausstoß des Metallstückes (25; 25') gegenüber dem Verschluss bzw. Pfropf (23) zu bilden.

8. Vorrichtung nach einem der Ansprüche 1 bis 3, dadurch gekennzeichnet, dass der Sicherheitsabschnitt durch einen Verschluss bzw. Pfropf, der vollständig in einer Bohrung des Federkörpers festgelegt ist, und bevorzugt durch einen Gewindeverschluss bzw. -pfropf gebildet ist, der in die Bohrung des Federkörpers geschraubt ist.

9. Vorrichtung nach einem der voranstehenden Ansprüche, dadurch gekennzeichnet, dass der Kolben eine Stange aufweist, deren äußerstes Ende mit einem Kragen (6) ausgestattet ist, und dadurch, dass der Sicherheitsabschnitt in der Weise angeordnet ist, um an den Kragen (6) an einem Ort noch näher an der Achse der Stange (X) als an seinem Umfang anzustoßen.

10. Vorrichtung nach einem der voranstehenden Ansprüche, dadurch gekennzeichnet, dass der Kolben (4) aus einem Stück bzw. Blockgussstück ist.

11. Vorrichtung nach einem der voranstehenden Ansprüche, dadurch gekennzeichnet, dass der Verlauf bzw. Weg des Kolbens, von dem an er den Sicherheitsabschnitt anstößt und die Entlüftung bzw. Öffnung der Kompressionskammer erregt, oberhalb von wenigstens 2 mm zu seinem nominalen Verlauf bzw. Weg ist.

12. Vorrichtung nach einem der voranstehenden Ansprüche, dadurch gekennzeichnet, dass der benutzte Fluid ein Gas ist.

## Claims

1. Compressible-fluid device, such as a pneumatic spring, comprising a compression chamber (3) and a piston (4) moveable in this chamber, characterized in that it comprises a safety member (21) arranged so as to be struck by the piston (4) in the event of a stroke of the latter greater than its nominal stroke by a predetermined value, and in that the said safety member (21; 21') is designed to cause the venting of the compression chamber (3) when the said member is struck by the piston.

2. Device according to Claim 1, characterized in that the said safety member (21; 21') has a portion (22), the breaking force of which is predetermined.

3. Device according to either of Claims 1 and 2, characterized in that the said safety member forms a projection in the bottom of the compression chamber, preferably of at least 3 mm.

4. Device according to any one of the preceding claims, characterized in that the said safety member is integral with a hollow plug (23) screwed into the body of the spring.

5. Device according to Claim 4, characterized in that the safety member comprises a central stud (25; 25') connected to the said plug (23) by means of a thinned annular portion (22).

6. Device according to the preceding claim, characterized in that the central stud (25; 25') is frustoconical.

7. Device according to Claim 5 or 6, characterized in that it comprises a plate attached to the body of the spring, so as to form a protective screen against the expulsion of the stud (25; 25') through the said plug (23).

8. Device according to any one of Claims 1 to 3, characterized in that the safety member consists of a solid plug fastened in a drillhole of the body of the spring, preferably of a threaded plug screwed into a drillhole of the body of the spring.

9. Device according to any one of the preceding claims, characterized in that the piston comprises a rod, the lower end of which is provided with a collar (6), and in that the safety member is arranged so as to be struck by the collar (6) at a location nearer to the axis of the rod (X) than to its periphery.

10. Device according to any one of the preceding claims, characterized in that the piston (4) is in one piece.

11. Device according to any one of the preceding claims, characterized in that the stroke of the piston from which is strikes the safety member and causes the venting of the compression chamber is at least 2 mm greater than its nominal stroke.

12. Device according to any of the preceding claims, characterized in that the fluid that is used is a gas.
